# FASCICULE DE BREVET EUROPEEN

(11) **EP 2 320 623 B1**
(45) Date de publication et mention de la délivrance du brevet: **01.04.2020**
(21) Numéro de dépôt: 10188465.8
(22) Date de dépôt: 22.10.2010
(51) Int. Cl.: H04L 29/08, H04L 29/06

(54) **PROCÉDÉ DE FOURNITURE D'UN SERVICE**
VERFAHREN ZUR BEREITSTELLUNG EINES DIENSTES
METHOD FOR SUPPLYING A SERVICE

(30) Priorité: 09.11.2009 FR 0957900
(43) Date de publication de la demande: 11.05.2011
(73) Titulaire: Orange, 75015 Paris (FR)
(72) Inventeur: Sbata, Karim, 94270 Le Kremlin Bicetre (FR)

(56) Documents cités:
- EP-A1- 1 993 254
- EP-A1- 2 003 573
- US-A1- 2009 006 646
- SAMAN ZARANDIOON ET AL: "OMOS: A Framework for Secure Communication in Mashup Applications", 8 décembre 2008 (2008-12-08), COMPUTER SECURITY APPLICATIONS CONFERENCE, 2008. ACSAC 2008. ANNUAL, IEEE, PISCATAWAY, NJ, USA, PAGE(S) 355 - 364, XP031376790, ISBN: 978-0-7695-3447-3 * Sections 1, 3 *

## Description

### Domaine technique

L'invention se rapporte à un procédé de fourniture d'un premier service fourni par un premier fournisseur de service, ledit premier service faisant appel pour la fourniture du premier service à un deuxième service d'un deuxième fournisseur de service, ledit deuxième service étant accessible depuis le premier service au travers d'une interface de programmation le plus désigné par l'homme du métier par l'acronyme API (Application Programming Interface).

### Etat de la technique

Actuellement, sur le réseau Internet, les fournisseurs de services peuvent enrichir leurs sites Internet avec des interfaces de programmation, plus généralement désignées par l'acronyme API (Application Programming Interface), permettant au cours d'une session de communication entre un module de navigation et un service d'accéder à un autre service sans interrompre la session en cours. Ces interfaces de programmation sont généralement au format "Web service" (par exemple les protocoles REST (acronyme de l'expression anglo-saxone de "Representational state transfer") ou SOAP (acronyme de l'expression anglo-saxone de "Simple Object Access Protocol")) connus de l'homme du métier. En d'autres mots, les interfaces de programmation enrichissent les services en offrant la possibilité à un utilisateur d'interagir avec un deuxième service au cours d'une session avec un premier service. Un deuxième service est le plus souvent un service dit personnel en ce sens qu'ils stockent des données personnelles appartenant à des utilisateurs. Un deuxième service est par exemple un service de gestion d'un calendrier, d'un carnet d'adresses, d'album photos, etc., fourni par exemple aux abonnés d'un service de télécommunication lié à un compte internet ou à un compte de téléphonie mobile.

Ainsi, un utilisateur utilisant par exemple un service d'envoi de courrier offert par un premier fournisseur peut accéder, via une interface de programmation visible sur le site Internet d'envoi de courrier, à son propre carnet d'adresse géré par un second fournisseur, par exemple un opérateur de télécommunication, et inclure dans le courrier à envoyer l'adresse d'un contact stockée dans le carnet d'adresses, le tout sans interrompre la session de navigation avec le service d'envoi de courrier.

L'utilisation d'un service doté d'au moins une interface met en jeu trois acteurs. Un premier acteur est un module de navigation logiciel, généralement un navigateur Internet présent sur un dispositif utilisé par un utilisateur. Un deuxième acteur est un premier serveur délivrant un premier service. Enfin, un troisième acteur est un deuxième serveur fournissant un deuxième service associé à l'interface.

Ces trois acteurs échangent des données pour la fourniture d'un premier service. En reprenant l'exemple d'envoi de courrier cité ci-dessus, l'échange de données entre les trois acteurs est le suivant. Nous supposons ici que le site d'envoi de courrier possède une interface de programmation permettant d'utiliser le carnet d'adresses géré par un opérateur de télécommunication pour faciliter la saisie d'une adresse dans un formulaire d'envoi de courrier.

Tout d'abord, un utilisateur accède via un navigateur à un premier service offert par un premier fournisseur de service.

Ensuite, une page internet est affichée sur un écran d'un ordinateur. Cette page affiche le premier service ainsi qu'au moins une interface de programmation décrite ci-dessus.

A ce stade, une session de communication est ouverte entre le navigateur et le premier fournisseur. Un utilisateur peut ensuite, sans interrompre la session avec le premier fournisseur, utiliser l'interface de programmation et requérir, par le biais de cette interface, un accès à des données personnelles stockées par un deuxième fournisseur. Les données sont par exemple une adresse d'un contact stocké dans un carnet d'adresse.

Lors d'une première étape, la requête est reçue par un premier serveur appartenant au premier fournisseur. Après réception, le premier serveur du premier fournisseur requiert lors d'une deuxième étape une authentification du module de navigation. Si l'authentification est réussie, les données prouvant que l'authentification est réussie, appelées jeton, sont transmises lors d'une troisième étape depuis le premier serveur du premier fournisseur vers un deuxième serveur appartenant au deuxième fournisseur. Pour information, ce jeton comprend généralement deux informations essentielles de préférence chiffrées à savoir l'identifiant du premier fournisseur et l'identifiant de l'utilisateur dans le référentiel du deuxième fournisseur.

Le deuxième serveur du deuxième fournisseur reçoit ensuite le jeton et transmet en retour lors d'une quatrième étape les données personnelles au premier serveur du premier fournisseur à savoir les informations demandées relatives à un ou plusieurs contacts.

Les informations demandées sont transmises lors d'une cinquième étape au dispositif par le premier serveur.

L'utilisateur accède aux informations et les utilisent pour la réalisation du service offert par le premier serveur.

On s'aperçoit, dans la suite d'étapes qui précèdent, que les données échangées transitent toutes par le premier serveur. Or les données sont personnelles et parfois sensibles et il n'est pas souhaitable que le premier fournisseur ait accès à l'intégralité de ces données personnelles sans un filtrage explicite de l'utilisateur à qui appartiennent ces données. En effet, ayant connaissance des données personnelles le premier fournisseur pourrait les utiliser à des fins non souhaitées, par exemple à des fins commerciales, etc.

De plus, la participation à tous les échangent nécessitent l'intégration de programmes d'ordinateurs dans le premier serveur. Or une intégration n'est pas simple pour le deuxième fournisseur et n'est pas toujours souhaité par le premier fournisseur car cette intégration implique un coût en temps et en argent non négligeable. En effet, une intégration implique pour le deuxième fournisseur la fourniture aux premiers fournisseurs intéressés d'un ensemble d'informations comprenant des kits de développement incluant des bibliothèques de code dans de langage de programmation connus par des experts en informatique dont ne dispose pas forcément le premier fournisseur. Pour information les langages les plus utilisés aujourd'hui sont les langages php, java, .net. De plus, une intégration de programmes d'ordinateur dans le premier serveur du premier fournisseur nécessite quelques jours de travail. Le coût en temps n'est donc pas négligeable. Une intégration requiert aussi une connaissance fonctionnelle des tests préalables à la mise à disposition au public du service concerné ; cependant le premier fournisseur ne dispose pas toujours de cette connaissance. Enfin, une intégration entraîne dans un serveur dit stable des effets de bord non souhaitables pour un premier fournisseur.

Les demandes US 2009/006646 A1 (DUARTE KEITH B) et EP 1 993 254 A1 (ARMANGIL DOGA) ont trait à des systèmes appartenant au même domaine technique. Ces deux systèmes présentent le même problème que celui visé ci-dessus.

### L'invention

L'invention vient améliorer la situation. A cet effet, l'invention a pour objet un procédé d'utilisation tel que défini dans la revendication 1.

Grâce à l'invention, le premier fournisseur ne reçoit plus les données personnelles directement depuis le deuxième service. Les données personnelles sont dans un premier temps transmises au module de navigation ; dans un deuxième temps, un utilisateur sélectionne des données parmi les données utiles reçues et le module de navigation transmet les données sélectionnées au premier service. Par exemple, en reprenant l'exemple dans lequel le premier service est un service d'envoi de courrier, le deuxième serveur transmet par exemple au module de navigation l'ensemble des adresses de contacts d'un carnet d'adresses, l'utilisateur sélectionne ensuite une adresse dans ce carnet d'adresse, et transmet cette adresse au premier service pour qu'il l'insère dans le courrier à envoyer. Un exemple de réalisation décrit ci-dessous donnera plus de détails sur le procédé de l'invention.

Aussi, grâce à la présente invention, les programmes à intégrer dans le premier serveur relativement au deuxième service sont réduits au moins aux programmes permettant, lorsqu'ils sont exécutés, une réception de données utiles issues du module de navigation.

Si la demande d'accès au deuxième service est issue du module et reçue par le premier service pour exécution, le premier serveur intègre dans ce cas au moins un programme permettant lorsqu'il est exécuté, une réception d'une requête d'accès au deuxième service depuis le module de navigation ; et une émission d'une réponse comprenant des données permettant au module de communiquer avec le deuxième service. Dans cette configuration, selon une variante du procédé, une demande d'ouverture d'une session, dite première session, entre le module de navigation et le premier service est suivie d'une étape de transmission de données d'accès (par exemple en se basant sur l'exemple d'un premier service d'envoi de courrier, une donnée d'accès est l'adresse internet (URL) du site qui gère le carnet d'adresse) au deuxième service, depuis le premier service vers le module de navigation; après réception des données d'accès, le module de navigation réalise une étape de transmission, à destination du deuxième service, d'une demande d'accès au deuxième service à la base de tout ou partie des données d'accès reçues.

Ainsi, on s'aperçoit que, lorsque le module possède les données d'accès précitées, le module et le deuxième service communique entre eux sans que le premier service n'intervienne. Il n'y a donc pas de programmes d'ordinateur particuliers à prévoir dans le premier serveur pour obtenir des données utiles auprès du deuxième service, car la demande d'accès aux données utiles est réalisée par le module de navigation.

Selon une autre variante, au cours d'une première session entre le module de navigation et le premier service, dite première session, une ouverture de session de navigation entre le module de navigation et le deuxième service, dite deuxième session est suivie d'une étape d'authentification du module de navigation par le deuxième service. Dans cette configuration, l'échange de données d'authentification est réalisé entre le module et le deuxième service, et la deuxième étape de transmission précitée est conditionnée au résultat de l'étape d'authentification. Encore une fois, le module de navigation et le deuxième service communique entre eux lors de l'authentification, et cela sans intervention du premier service. Encore une fois, Il n'y a pas de programmes d'ordinateur particuliers à prévoir dans le premier serveur pour la phase d'authentification entre le deuxième service et le module de navigation.

Selon un aspect matériel, l'invention a trait à un dispositif de traitement de données, dit troisième dispositif dans l'exemple de réalisation qui suit,tel que défini dans la revendication 4.

Selon un autre aspect matériel, l'invention se rapporte à un dispositif de traitement de données, dit deuxième dispositif dans l'exemple de réalisation décrit dans la suite de la description, incluant un service, dit deuxième service, apte à fournir des données utiles à la réalisation d'un autre service, dit premier service, apte à être utilisé par un module de navigation, caractérisé en ce qu'il comprend des moyens de transmission aptes à transmettre au module tout ou partie des données utiles.

L'invention a trait aussi à un programme d'ordinateur tel que défini dans la revendication 5.

L'invention aussi trait à un autre programme d'ordinateur apte à être mise en œuvre sur le deuxième dispositif défini ci-dessus, le programme comprenant des instructions de code qui, lorsque le programme est exécuté réalise une étape de transmission aptes à transmettre au module tout ou partie des données utiles.

L'invention sera mieux comprise à la lecture de la description qui suit, donnée à titre d'exemple et faite en référence aux dessins annexés.

### Les figures:

La figure 1 représente un système informatique sur lequel est illustré un système informatique dans lequel l'invention peut être mise en œuvre.
La figure 2 illustre un exemple d'une page Internet associée à un premier service apte à mettre en œuvre l'invention.
La figure 3 est une illustration schématique, sous forme de diagramme de flux de données, d'un échange de données entre les différents acteurs aptes à mettre en œuvre le service.

### Description détaillée d'un exemple de réalisation illustrant l'invention

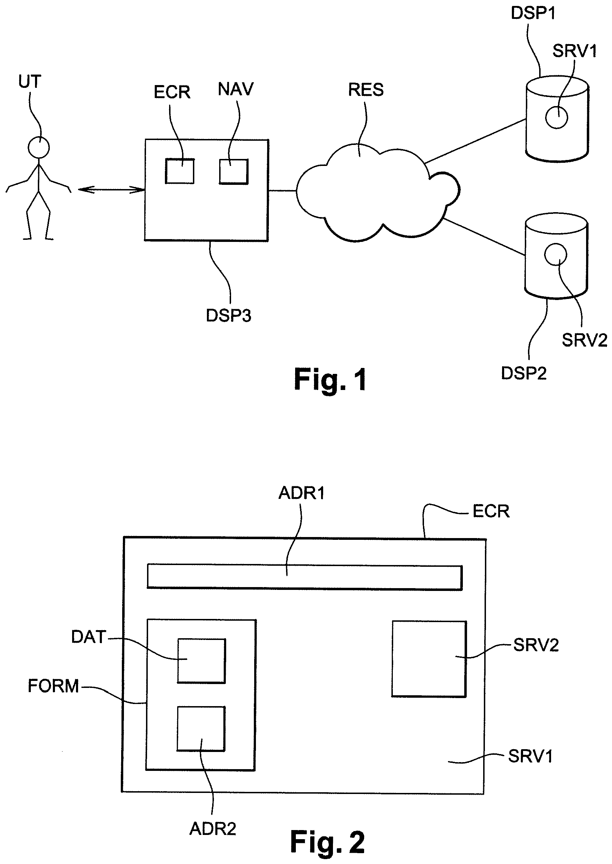

La figure 1 représente un système SYS comprenant plusieurs dispositifs DSP1-DSP3 connectés entre eux par l'intermédiaire d'un réseau de communication RES. Les dispositifs sont équipés d'au moins un processeur (non représenté) et d'au moins une mémoire (non représentée) pour le traitement de données.

Les premier et deuxième dispositifs, respectivement DSP1 et DSP2, sont illustrés au moyen de deux serveurs. Le premier serveur DSP1 stocke un premier service SRV2 d'envoi de courrier. Le deuxième serveur DSP2 stocke un service SRV2 de gestion d'un carnet d'adresse apte à gérer les contacts et adresses pour le compte d'utilisateurs ayant par exemple souscrit un abonnement auprès du deuxième fournisseur. Dans notre exemple, un utilisateur UT a souscrit un abonnement auprès du deuxième fournisseur, par exemple un opérateur de télécommunication, pour la gestion de son carnet d'adresse. Cet utilisateur dispose d'un dispositif PC illustré au moyen d'un ordinateur. Cet ordinateur comprend un écran ECR et un module de navigation illustré par un navigateur internet NAV. Grâce à ce navigateur, l'utilisateur peut accéder au deuxième service et afficher sur l'écran ECR des pages internet au format HTML connu de l'homme du métier.

La figure 2 illustre un exemple d'une page internet affichée par le navigateur NAV sur l'écran ECR de l'ordinateur PC. La page affichée par le navigateur NAV en question comprend, une barre d'adresse dans laquelle l'utilisateur saisit l'adresse d'un service qu'il souhaite accéder. La page affichée comprend également un contenu propre à chaque service. Dans notre exemple, ce contenu comprend une partie incluant un formulaire à remplir pour l'envoi d'un courrier. Ce formulaire FORM comprend une adresse ADR2 à compléter, l'adresse étant l'adresse d'une personne à qui est destiné le courrier. Ce formulaire peut naturellement inclure d'autres données DAT que l'adresse telles que la date, l'heure, le courrier à joindre, le mode d'envoi du courrier, etc.

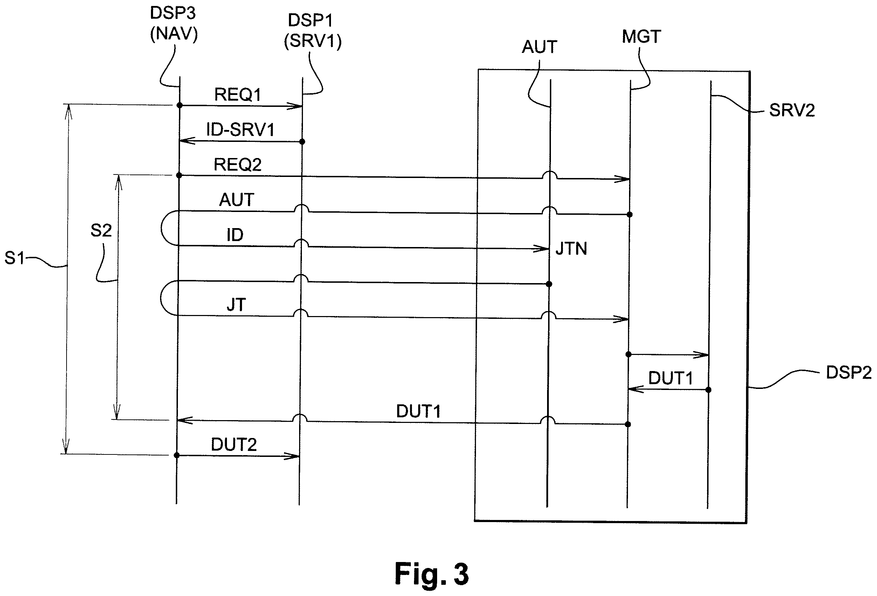

La figure 3 illustre les étapes d'un exemple de réalisation du procédé de l'invention. Dans l'exemple, l'utilisateur abonné au deuxième service à un identifiant ID ; le premier service a aussi un identifiant ID-SRV1 qui est par exemple l'adresse URL de ce service.

Lors d'une première étape, un utilisateur UT de l'ordinateur DSP3 ouvre un module de navigation NAV. Dans notre exemple, le module de navigation est un navigateur Internet.

Lors d'une deuxième étape, l'utilisateur requiert un accès à un premier service d'envoi de courrier SRV1 en saisissant l'adresse URL correspondant au site d'envoi de courrier et en validant la saisie. Suite à la validation, une première requête REQ1 est émise à destination du premier service SRV1.

Lors d'une troisième étape, le premier service SRV1 transmet en retour des paramètres au navigateur NAV pour l'affichage sur l'écran ECR de la page internet.

Lors d'une quatrième étape, le navigateur NAV affiche la page du site d'envoi de courrier. Cette page est celle illustrée sur la figure 2 décrite précédemment.

A ce stade du procédé, une première session de navigation S1 est ouverte entre le navigateur NAV et le premier service SRV1. L'utilisateur peut alors décider d'envoyer un courrier par exemple à un ami.

Afin de faciliter la saisie de l'adresse du destinataire du courrier, le premier service SRV1 propose un accès à au moins un deuxième service SRV2 apte à fournir des adresses. Notre exemple se limite à un seul deuxième service SRV2 accessible via le premier service ; cependant ce nombre peut être supérieur. Une interface de programmation associée à ce deuxième service est affichée à l'écran. Dans notre exemple de réalisation, ce deuxième service est un service auprès duquel l'utilisateur a souscrit un abonnement. Ce deuxième service est, dans notre exemple, un compte de téléphonie mobile dans lequel est géré un carnet d'adresses appartenant à l'utilisateur UT.

Lors d'une cinquième étape, l'utilisateur sélectionne l'interface liée au deuxième service au moyen d'un outil de sélection par exemple une souris connectée au troisième dispositif, et exécute l'interface.

Dans la suite de la description, une distinction est faite entre plusieurs types de données :
- des données d'authentification, qui permettront d'authentification d' l'utilisateur UT;
- des données utiles qui peuvent être transmises par un deuxième service à destination d'un autre service pour la réalisation de cet autre service. Par exemple, dans la configuration qui précède, le deuxième service est apte à transmettre des données utiles telles qu'une adresse pour la résiliation du premier service d'envoi de courrier.

Lors d'une sixième étape, suite à l'exécution de l'interface, le navigateur transmet non pas au premier service mais à un module de gestion MGT inclut dans le deuxième service SRV2 une deuxième requête REQ2 d'activation de service. Dans notre exemple, cette deuxième requête inclut une demande de réception de données utiles DUT1 et accessoirement un identifiant ID-SRV1 du premier service apte à le distinguer d'autres services. Cet identifiant ID-SRV1 permet au deuxième service SRV2 de vérifier les droits du premier fournisseur à requérir l'exécution du deuxième service. Cet identifiant ID-SRV1 peut être par exemple l'adresse URL du premier service SRV1.

Dans la suite, on considère que le premier service SRV1 est bien enregistré auprès du deuxième fournisseur et que donc le premier service est autorisé à utiliser le deuxième service.

Lors d'une septième étape, le deuxième service SRV2 est exécuté et une deuxième session de navigation S2 est ouverte entre le navigateur et ce deuxième service.

A ce stade du procédé, deux sessions de navigation sont ouvertes, à savoir une première session S1 entre le module NAV et le premier service SRV1, et une deuxième session S2 entre le module et le deuxième service SRV2.

Plusieurs phases ont lieu au cours de la deuxième session S2.

Dans la suite, on considère que le deuxième dispositif DSP2 inclut un module d'authentification AUT, un module de gestion MGT apte à recevoir des requêtes depuis le navigateur NAV et à répondre au navigateur. Le deuxième serveur inclut aussi le deuxième service SRV2.

Dans cette configuration le module de gestion MGT est apte
- à gérer l'authentification avant l'accès au deuxième service si une authentification est nécessaire,
- à requérir un accès aux données utiles UT1 auprès du deuxième service SRV2,
- à recevoir les données utiles UT1 depuis le deuxième service et à les fournir de préférence directement au module de navigation NAV.

Le navigateur NAV va maintenant être authentifié. Pour cela, le module de gestion MGT transmet lors d'une première phase une requête d'authentification AUT à destination du navigateur NAV.

A réception de la requête d'authentification AUT, le navigateur NAV répond automatiquement lors d'une deuxième phase en fournissant au module d'authentification AUT un identifiant ID de l'utilisateur UT abonné au deuxième service qui a initié la deuxième requête REQ2 afin de l'authentifier. En général, cet identifiant est fourni lors de la souscription à un abonnement à un service.

Lors d'une troisième phase, le module d'authentification AUT authentifie l'utilisateur qui est abonné au deuxième service et créé des données prouvant l'authentification. La preuve JTN est généralement appelée jeton par l'homme du métier. Ce jeton est généralement chiffré pour des raisons de sécurité. Dans notre exemple, ce jeton inclut
- l'identifiant du premier service ID-SRV1
- l'identifiant ID de l'utilisateur abonné UT.

Lors d'une quatrième phase, le module d'authentification AUT transmet le jeton JTN au navigateur NAV qui retransmet automatiquement ce jeton au module de gestion MGT.

Lors d'une cinquième phase, le module de gestion MGT reçoit le jeton et vérifie si l'authentification a été réussie.

Dans la négative, le deuxième service SRV2 ne fournit pas le service demandé.

On admet ici que l'authentification a été réussie. Ainsi, lors d'une sixième phase, le deuxième service SRV2 transmet des données utiles DUT1, dites premières données utiles, demandées dans la deuxième requête REQ2 au navigateur NAV, de préférence directement. Dans notre exemple, les premières données utiles correspondent à l'ensemble des adresses du carnet d'adresses appartenant à l'utilisateur UT.

Lors d'une septième phase, le navigateur NAV reçoit les premières données utiles demandées DUT1.

Lors d'une huitième phase, l'utilisateur sélectionne tout ou partie des données utiles reçues DUT1, les données utiles ainsi sélectionnées formant des deuxièmes données utiles. Par exemple, l'utilisateur sélectionne un seule adresse dans l'ensemble des adresses reçues à la sixième phase.

A ce stade, l'utilisateur peut se déconnecter, sans que ce soit obligatoire, du deuxième service et poursuivre la première session de navigation. Ainsi, Lors d'une huitième étape, le navigateur transmet les deuxièmes données utiles sélectionnées DUT2 lors de la huitième phase au premier service. Dans notre exemple, l'adresse sélectionnée est transmise au premier service.

Ensuite, lors d'une neuvième étape, l'utilisateur joint par exemple les pièces du courrier à envoyer et valide l'ensemble constitué par lesdites pièces et l'adresse sélectionnée.

Enfin, lors d'une dixième étape, le premier service SRV1 se charge de l'envoi du courrier au destinataire dont l'adresse a été sélectionnée.

## Revendications

1. Procédé d'utilisation, depuis un module de navigation (NAV) stocké sur un dispositif (PC), d'un premier service d'envoi de courrier (SRV1) incluant une interface de programmation apte à accéder, lors d'une session de navigation entre le module de navigation et ce premier service, à un deuxième service (SRV2) apte à fournir au premier service des adresses de contacts d'un carnet d'adresses pour l'envoi d'un courrier à un utilisateur destinataire, **caractérisé en ce que** le procédé comprend dans le module de navigation, ,
a. une étape d'accès au premier service (SRV1) ;
b. une étape de réception depuis le premier service d'envoi de courrier (SRV1) d'une donnée d'accès au deuxième service (SRV2),
c. une étape de transmission au deuxième sevice (SRV2) d'une requête d'accès à des adresses de contacts ;
d. une étape de réception depuis le deuxième service 'à une pluralité d'adresses de contacts (DUT1),
e. une étape de sélection d'une adresse d'un contact destinataire du courrier, l'adresse étant sélectionnée dans la pluralité d'adresses de contact reçues ;
f. une étape de transmission à destination du premier service de l'adresse du contact sélectionnée.

2. Procédé selon la revendication 1, **caractérisé en ce qu'**une demande d'ouverture d'une session entre le module de navigation et le premier service, dite première session, est suivie d'une étape de transmission de données d'accès au deuxième service, depuis le premier service vers le module de navigation, et **en ce qu'**après réception des données d'accès, le module de navigation réalise une étape de transmission, à destination du deuxième service, d'une demande d'accès au deuxième service à la base de tout ou partie des données d'accès reçues.

3. Procédé selon les revendications 1 et 2, **caractérisé en ce qu'**au cours d'une première session entre le module de navigation et le premier service, dite première session, une ouverture de session de navigation entre le module de navigation et le deuxième service, dite deuxième session, est suivie d'une étape d'authentification du module de navigation, **en ce que** l'échange de données d'authentification est réalisé entre le module et le deuxième service, et **en ce que** la deuxième étape de transmission est conditionnée au résultat de l'étape d'authentification.

4. Dispositif de traitement de données (DSP3) incluant un module de navigation (NAV) apte à utiliser un premier service d'envoi de courrier (SRV1) incluant une interface de programmation apte à accéder, lors d'une session de navigation entre le module de navigation et ce premier service, à un deuxième service apte à fournir au premier service des adresses de contacts d'un carnet d'adresses pour pour l'envoi d'un courrier à un utilisateur destinataire, **caractérisé en ce qu'**il comprend
- Des moyens d'accès au premier service (SRV1) ;-
- des moyens de réception depuis le premier service d'envoi de courrier (SRV1) d'une donnée d'accès au deuxième service (SRV2),
- Des moyens de transmission au deuxième service (SRV2) d'une requête d'accès à des adresses de contacts ;
- Des moyens de réception d'une pluralité d'adresses de contact depuis le deuxième service ;
- Des moyens de sélection d'une adresse d'un contact destinataire du courrier, l'adresse étant sélectionnée dans la pluralité d'adresses de contact reçues
- Des moyens de transmission aptes à transmettre, l'adresse de contact sélectionnée à destination du premier service.

5. Programme d'ordinateur apte à être mise en œuvre sur un dispositif tel que défini dans la revendication 4, le programme comprenant des instructions de code qui, lorsque le programme est exécuté réalise les étapes définies dans la revendication 1.

## Patentansprüche

1. Verfahren zur Nutzung, von einem auf einer Vorrichtung (PC) gespeicherten Navigationsmodul (NAV) aus, eines ersten E-Mail-Dienstes (SRV1), der eine Programmierschnittstelle aufweist, die in der Lage ist, während einer Navigationssitzung zwischen dem Navigationsmodul und diesem ersten Dienst auf einen zweiten Dienst (SRV2) zuzugreifen, der in der Lage ist, dem ersten Dienst Kontaktadressen eines Adressbuches zum Senden einer E-Mail an einen Zielbenutzer zu liefern, **dadurch gekennzeichnet, dass** das Verfahren in dem Navigationsmodul umfasst:
a. einen Schritt des Zugriffs auf den ersten Dienst (SRV1);
b. einen Schritt des Empfangs, von dem ersten E-Mail-Dienst (SRV1), von Zugangsdaten für den zweiten Dienst (SRV2);
c. einen Schritt der Übertragung, an den zweiten Dienst (SRV2), einer Anforderung des Zugangs zu Kontaktadressen;
d. einen Schritt des Empfangs, von dem zweiten Dienst, einer Vielzahl von Kontaktadressen (DUT1),
e. einen Schritt der Auswahl einer Adresse eines Zielkontaktes der E-Mail, wobei die Adresse aus der Vielzahl von empfangenen Kontaktadressen ausgewählt wird;
f. einen Schritt der Übertragung, an den ersten Dienst, der ausgewählten Adresse des Kontakts.

2. Verfahren nach Anspruch 1, **dadurch gekennzeichnet, dass** auf eine Anforderung zur Eröffnung einer Sitzung zwischen dem Navigationsmodul und dem ersten Dienst, erste Sitzung genannt, ein Schritt der Übertragung von Zugangsdaten für den zweiten Dienst von dem ersten Dienst zum Navigationsmodul folgt, und dadurch, dass das Navigationsmodul nach dem Empfang der Zugangsdaten einen Schritt der Übertragung, an den zweiten Dienst, einer Anforderung des Zugangs zu dem zweiten Dienst auf der Basis aller empfangen Zugangsdaten oder eines Teils davon ausführt.

3. Verfahren nach den Ansprüchen 1 und 2, **dadurch gekennzeichnet, dass** während einer ersten Sitzung zwischen dem Navigationsmodul und dem ersten Dienst, erste Sitzung genannt, auf eine Eröffnung einer Navigationssitzung zwischen dem Navigationsmodul und dem zweiten Dienst, zweite Sitzung genannt, ein Schritt der Authentifizierung des Navigationsmoduls folgt, dadurch, dass der Austausch von Authentifizierungsdaten zwischen dem Modul und dem zweiten Dienst durchgeführt wird, und dadurch, dass der zweite Schritt der Übertragung vom Ergebnis des Schrittes der Authentifizierung abhängig ist.

4. Datenverarbeitungsvorrichtung (DSP3), welche ein Navigationsmodul (NAV) aufweist, das in der Lage ist, einen ersten E-Mail-Dienst (SRV1) zu nutzen, der eine Programmierschnittstelle aufweist, die in der Lage ist, während einer Navigationssitzung zwischen dem Navigationsmodul und diesem ersten Dienst auf einen zweiten Dienst zuzugreifen, der in der Lage ist, dem ersten Dienst Kontaktadressen eines Adressbuches zum Senden einer E-Mail an einen Zielbenutzer zu liefern, **dadurch gekennzeichnet, dass** sie umfasst:
- Mittel zum Zugriff auf den ersten Dienst (SRV1);
- Mittel zum Empfang, von dem ersten E-Mail-Dienst (SRV1), von Zugangsdaten für den zweiten Dienst (SRV2);
- Mittel zur Übertragung, an den zweiten Dienst (SRV2), einer Anforderung des Zugangs zu Kontaktadressen;
- Mittel zum Empfang einer Vielzahl von Kontaktadressen von dem zweiten Dienst;
- Mittel zur Auswahl einer Adresse eines Zielkontaktes der E-Mail, wobei die Adresse aus der Vielzahl von empfangenen Kontaktadressen ausgewählt wird;
- Mittel zur Übertragung, die in der Lage sind, die ausgewählte Kontaktadresse an den ersten Dienst zu übertragen.

5. Computerprogramm, welches auf einer Vorrichtung, wie in Anspruch 4 definiert, ausführbar ist, wobei das Programm Codeanweisungen umfasst, die, wenn das Programm ausgeführt wird, die in Anspruch 1 definierten Schritte ausführen.

## Claims

1. Method for using, in a browser module (NAV) stored on a device (PC), a first mail-sending service (SRV1) including a programming interface able, during a browsing session between the browser module and this first service, to access a second service (SRV2), which is able to provide the first service with addresses of contacts from an address book in order to send mail to a recipient user, **characterized in that** the method comprises, in the browser module,
a. a step of accessing the first service (SRV1);
b. a step of receiving from the first mail-sending service (SRV1) an access datum for access to the second service (SRV2);
c. a step of transmitting to the second service (SRV2) a request for access to addresses of contacts;
d. a step of receiving from the second service a plurality of addresses of contacts (DUT1);
e. a step of selecting an address of a contact who is the recipient of the mail, the address being selected from the plurality of contact addresses received;
f. a step of transmitting to the first service the selected address of the contact.

2. Method according to Claim 1, **characterized in that** a request for opening a session between the browser module and the first service, known as first session, is followed by a step of transmitting, from the first service to the browser module, access data for access to the second service, and **in that**, after receiving the access data, the browser module performs a step of transmitting to the second service a request for access to the second service based on all or some of the received access data.

3. Method according to Claims 1 and 2, **characterized in that** during a first session between the browser module and the first service, known as first session, the opening of a browsing session between the browser module and the second service, known as second session, is followed by a step of authenticating the browser module, **in that** the interchange of authentication data is performed between the module and the second service, and **in that** the second transmission step is conditional on the result of the authentication step.

4. Device for processing data (DSP3) including a browser module (NAV) that is able to use a first mail-sending service (SRV1) including a programming interface able, during a browsing session between the browser module and this first service, to access a second service, which is able to provide the first service with addresses of contacts from an address book in order to send mail to a recipient user, **characterized in that** it comprises
- means for accessing the first service (SRV1);
- means for receiving from the first mail-sending service (SRV1) an access datum for access to the second service (SRV2);
- means for transmitting to the second service (SRV2) a request for access to addresses of contacts;
- means for receiving a plurality of contact addresses from the second service;
- means for selecting an address of a contact who is the recipient of the mail, the address being selected from the plurality of contact addresses received;
- transmission means able to transmit the selected contact address to the first service.

5. Computer program able to be implemented on a device such as is defined in Claim 4, the program comprising code instructions which, when the program is executed, perform the steps defined in Claim 1.
